# EUROPEAN PATENT APPLICATION

(11) **EP 2 223 622 A1**
(43) Date of publication of application: **01.09.2010**
(21) Application number: 08862167.7
(22) Date of filing: 15.12.2008
(51) Int. Cl.: A44B 1/02, B29C 45/00, C08J 5/00, C08K 3/00, C08L 67/04, B29L 19/00, C08L 101/16

(54) **BUTTON MADE FROM BIOMASS RAW MATERIAL AND METHOD FOR PRODUCING THE SAME**

(30) Priority: 18.12.2007 JP 2007325525
(71) Applicant: Teijin Limited, Osaka-shi, Osaka 541-0054 (JP)
(72) Inventor: MISAKI, Yoshio, Kyoto-shi Kyoto 601-8204 (JP); IZAKI, Akihiro, Kyoto-shi Kyoto 601-8204 (JP); TOYOHARA, Kiyotsuna, Iwakuni-shi Yamaguchi 740-0014 (JP); KURIHARA, Hideshi, Tokyo 100-0013 (JP)
(74) Representative: Hallybone, Huw George
(86) International application number: PCT/JP2008/072776
(87) International publication number: WO 2009/078381

(57) **Abstract**

Provided is a button obtained by using a biomass material. The button has a heat deformation temperature of 160°C or more, and high quality as follows; excellent in heat resistance, high in strength, excellent in dyeing properties, and also capable of having transparency to semi-transparency and/or glossiness.

## Description

### TECHNICAL FIELD

The present invention relates to a button made of a biomass material without using limited petroleum resources, which is biodegradable and is excellent in heat resistance. The present invention relates to any kind of buttons including a button attachable to clothes etc. for an ornament or as an accessory, a button for packaging attachable to shoes, bags etc., and an industrial switch button attachable to electrical and mechanical devices etc.

### BACKGROUND ART

Buttons commercialized at present include those made of natural materials such as shell, wood, bamboo, bone, and horn, those made of plastics derived from petroleum oil such as nylon, ABS, and polycarbonate, and those made of a thermosetting resin such as urea and a biodegrading resin. However, the buttons derived from petroleum oil have problems of causing discharge of carbon dioxide gas and depletion of limited resources, and the buttons made of natural materials also have problems of waste treatment, for example, a large amount of residue after production of shell buttons or the like, and cracking at the time of cleaning. [Patent Document 1] JP-A-2002-363432

Incidentally, nowadays, countermeasures for global warming and environmental problems have been urgently demanded in respective industrial fields, a resin, fiber and the like made from biomass as a material are developed and commercialized (Patent Document 1 etc.), and for example, a resin made of stereocomplex-type polylactic acid has been attracted attention since it is excellent in heat resistance and hydrolysis resistance and has a certain level of strength. However, even though such a resin made of stereocomplex-type polylactic acid is used, especially in terms of a button, a satisfactory product has never been able to be obtained.

Further, according to a conventional method of molding a button, even though a polylactic acid having a melting point of 210°C is used, in reality, the resin is molten in a metal mold and thus can not be molded, or a molded product is closely attached to an inner wall of the metal mold and thus can not be taken out from the metal mold, or even if the product can be anyhow taken out from the metal mold, there are many problems such that a shape is not uniform, or heat resistance and strength are inferior, and what is more, a button excellent in a design property with transparency to semi-transparency and/or glossiness has never been able to be obtained.

### DISCLOSURE OF THE INVENTION

### PROBLEM TO BE SOLVED BY THE INVENTION

Accordingly, an object of the present intention is to provide a button biodegradable and reusable, in which a biomass material is used, and excellent in heat resistance, in particular, such a button having not only heat resistance but also high strength, and further, a button with high quality also having transparency to semi-transparency and/or glossiness.

### MEANS FOR SOLVING THE PROBLEMS

That is, the button of the present invention is characterized by being made of a biomass material and having a heat deformation temperature of 160°C or more.

Herein, in the present specification, the "heat deformation temperature" means a temperature of ironing at which a button is deformed at least in a part when an iron (1400 g) is pressed on the button placed on a horizontal board from above for 30 seconds.

The button of the present invention may be made of any biomass material, and as a biomass material, those containing polysaccharides such as cellulose, starch, chitin, and the like are preferable. Examples of a biomass material containing such polysaccharides include herbaceous plants such as wood, grass, and rice straw, grains, potatoes, sugarcane, and beet. Among the above described biomass materials, there are included materials obtained from such a biomass material, such as esterified starch, acetic acid cellulose, polylactic acid, polybutylene succinate, poly(butylene succinate/adipate), poly(butylene succinate/carbonate), poly(ethylene terephthalate/succinate), poly(butylene adipate/terephthalate), and polyethylene succinate, particularly among these examples, polylactic acid is preferable, and stereocomplex-type polylactic acid or polylactic acid mainly containing one of L-lactic acid or D-lactic acid is more preferable. In addition, in the present specification, "made of a biomass material" means that a button contains 30% by weight or more of a biomass material. The button made of a biomass material of the present invention is obtained by containing a biomass material in an amount of preferably 50% by weight or more, more preferably 60% by weight or more, and further more preferably 70% by weight or more, based on the whole weight of the button.

When the button of the present invention is made of stereocomplex-type polylactic acid, the button can be preferably produced by molding a molding material containing a resin made of stereocomplex-type polylactic acid.

The above-described resin made of stereocomplex-type polylactic acid contains a crystal in which a poly-L-lactic acid unit and a poly-D-lactic acid unit form one pair as the main ingredient, and is produced by, for example, mixing poly-L-lactic acid and poly-D-lactic acid, and thereafter cast-molding or melt-molding. The resin made of stereocomplex-type polylactic acid is excellent in heat resistance as compared with polylactic acid not forming stereocomplex, and has a feature of high hardness. In the present invention, any stereocomplex-type polylactic acid can be used, but one that can be preferably used is stereocomplex-type polylactic acid made of (i) poly-L-lactic acid containing L-lactic acid unit of preferably 90 to 100% by mol, more preferably 95 to 100% by mol and further more preferably 97 to 100% by mol and D-lactic acid unit and/or a copolymer unit other than lactic acid of preferably 0 to 10% by mol, more preferably 0 to 5% by mol and further more preferably 0 to 3% by mol and (ii) poly-D-lactic acid containing D-lactic acid unit of preferably 90 to 100% by mol, more preferably 95 to 100% by mol and further more preferably 97 to 100% by mol and L-lactic acid unit and/or a copolymer unit other than lactic acid of preferably 0 to 10% by mol, more preferably 0 to 5% by mol and further more preferably 0 to 3% by mol. As a resin made of the stereocomplex-type polylactic acid, those in which the poly-L-lactic acid (i) and the poly-D-lactic acid (ii) are used in a weight ratio (poly-L-lactic acid/poly-D-lactic acid) within the range of 30/70 to 70/30 is preferable, more preferably within the range of 40/60 to 60/40, and further more preferably within the range of 45/55 to 55/45, and a stereocomplex crystallinity degree thereof is preferably 90 to 100%, more preferably 95 to 100%, and further more preferably 98 to 100%, and a melting point thereof is preferably 150 to 240°C, more preferably 170 to 240°C, and further more preferably 190 to 240°C, and a weight average molecular weight thereof is preferably 70,000 to 200,000, more preferably 80,000 to 200,000, and further more preferably 100,000 to 170,000. For example, as such stereocomplex-type polylactic acid, stereocomplex-type polylactic acid as disclosed in JP-A-2007-191551, which has hydrolysis resistance, solvent resistance, and the like, and stereocomplex-type polylactic acid as disclosed in JP-A-2006-265486, which has high crystallinity and a high melting point can be preferably used.

In addition, as the poly-L-lactic acid (i) and the poly-D-lactic acid (ii), both of them having crystallinity are preferably used, and both of them preferably having a melting point of 150 to 175°C, more preferably 160 to 175°C, and further more preferably 165 to 175°C can be used, and both of them preferably having a weight average molecular weight of 50,000 to 350,000, more preferably 80,000 to 300,000, and further more preferably 100,000 to 250,000 can be used. Further, the copolymer component may be a unit derived from at least one monomer selected from, for example, hydroxycarboxylic acids such as glycolic acid, caprolactone, butyrolactone and propiolactone, ethylene glycol, 1,3-propanediol, 1,2-propanediol, 1,4-propanediol, 1,5-propanediol, hexanediol, octanediol, decanediol, dodecanediol, aliphatic diols having 2 to 30 carbon atoms, succinic acid, maleic acid, adipic acid, aliphatic dicarboxylic acid having 2 to 30 carbon atoms, telephthalic acid, isophtalic acid, hydroxybenzoic acid, aromatic diols such as hydroquinone, and aromatic dicarboxylic acid.

Stereocomplex-type polylactic acid having a stereocomplex crystallinity degree of 90% or more can be produced by sufficiently mixing poly-L-lactic acid and poly-D-lactic acid. If a mixing state is insufficient, the stereocomplex crystallinity degree can not be reached at 90% or more. As a method for producing such polylactic acid, there are exemplified a method of dissolving poly-L-lactic acid and poly-D-lactic acid in a solvent and mixing well, and then removing the solvent or a method of precipitating from a solvent, and a method of melting poly-L-lactic acid and poly-D-lactic acid and well kneading. In the case of melting and kneading, in order to mix well, a method of adding a large share in kneading, a method of adding a metal salt of a phosphoric ester, and a method of adding a triclinic compound such as calcium silicate can be used.

Further, in production of the stereocomplex-type polylactic acid, it is preferable that poly-L-lactic acid and poly-D-lactic acid are treated such that a polymerization catalyst used in polymerization is washed with a solvent and removed, or a catalyst is suitably inactivated using a catalyst deactivator such as a phosphor compound or a compound having an imino group. The following substances also may be suitably used: crystal nucleating agents, for example, inorganic nucleating agents such as metal salts of kaolinite, montmorillonite, synthetic mica, calcium sulfate, boron nitrate, barium sulfate, aluminum oxide, neodymium oxide and phenyl phosphonate, and organic nucleating agents such as metal salts of organic carboxylic acid such as sodium benzoate, potassium benzoate, lithium benzoate, calcium benzoate, magnesium benzoate, barium benzoate, lithium terephthalate, sodium terephthalate, potassium terephthalate, calcium oxalate, sodium laurate, potassium laurate, sodium myristate, potassium myristate, calcium myristate, sodium octacosanoate, calcium octacosanoate, sodium stearate, potassium stearate, lithium stearate, calcium stearate, magnesium stearate, barium stearate, sodium montanate, calcium montanate, sodium toluylate, sodium salicylate, potassium salicylate, zinc salicylate, aluminum dibenzoate, potassium dibenzoate, lithium dibenzoate, sodium-β-naphthalate and sodium cyclohexanecarboxylate; organic sulfonates such as sodium p-toluenesulfonate and sodium sulfoisophthalate, carboxylic acid amide such as stearic acid amide, ethylenebislauric acid amide, palmitic acid amide, hydroxystearic acid amide, erucic amide, and tris trimesic acid (t-butylamide), benzylidene sorbitol and derivatives thereof, metal salts of a phosphor compound such as sodium-2,2-methylenebis(4,6-di-t-butylphenyl)phosphonate, and sodium 2,2-methylbis(4,6-di-t-butylphenyl), and fillers such as silica, mica, calcium carbonate, a glass fiber, glass beads, barium sulfate, magnesium hydroxide, wollastonite, a calcium silicate fiber, a carbon fiber, a magnesium oxysulfate fiber, a potassium titanate fiber, titanium oxide, calcium sulfite, white carbon, clay, montmorillonite, and potassium sulfate.

The button of the present invention can be molded by a molding method selected from the group consisting of injection molding, extrusion molding, and compression molding of a molding material containing a crystalline material made of the stereocomplex-type polylactic acid, and in particular, the molding material is molded at a metal mold temperature of preferably 10 to 150°C, more preferably 10 to 70°C, and further more preferably 20 to 40°C, particularly in the case of using injection molding, by performing injection molding at an injection molding temperature of preferably 180 to 250°C, more preferably 190 to 240°C, and further more preferably 200 to 230°C, under the condition of a cycle time for preferably 15 to 70 seconds/cycle, more preferably 20 to 60 seconds/cycle, further more preferably 20 to 30 seconds/cycle, a button having at a heat deformation temperature of 160°C or more and a strength of 150 N or more in accordance with JIS-S-4025 can be certainly obtained without accompanying a problem such that the molding material is dissolved in the metal mold. Further, after molding by the above described molding method, by baking at preferably 80 to 130°C, more preferably 90 to 120°C, and further more preferably 100 to 110°C, for preferably 15 minutes to 8 hours, more preferably 30 minutes to 2 hours, and further more preferably 30 minutes to 1 hour 30 minutes under drying conditions according to necessity, not only a strength of a button is further improved, but also a transparent or semi-transparent button or a button with glossiness can be obtained. In addition, the button of the present invention can withstand the impact at the time of cleaning or the pressing pressure at the time of ironing as long as it has a strength in accordance with JIS-S-4025 of at least 150 N, and therefore, there is no practical problems, but in order to ensure higher durability, it is preferable to have a strength of 230 N or more in accordance with JIS-S-4025, and the button of the present invention with the strength of 230 N or more and 1000 N or less has excellent durability, and the button of the present invention with the strength of 230 N or more and 500 N or less has sufficient durability for practical uses.

According to the method of the present invention, by using the stereocomplex-type polylactic acid in a ratio of 70 to 100% by weight based on the whole molding material, a button having excellent heat resistance and high strength can be obtained, but even though the molding material contains a resin made of polylactic acid having a content of L-lactic acid or D-lactic acid of 90% or more (hereinafter, referred to as "homo-polylactic acid"), the button of the present invention provided with heat resistance and high hardness and having transparency to semi-transparency and/or glossiness can be obtained. For such homo-polylactic acid, any product commercially available as a polylactic acid resin mainly made of L-lactic acid or D-lactic acid can be used, but a product having a content of L-lactic acid or D-lactic acid of preferably 90 to 100%, more preferably 95 to 100%, and further more preferably 97 to 100% and a crystalline melting point of preferably 140 to 180°C, more preferably 150 to 180°C, and further more preferably 160 to 180°C, and a weight average molecular weight of 80,000 to 300,000, more preferably 80,000 to 250,000, and further more preferably 80,000 to 200,000 can be preferably used.

In addition, such homo-polylactic acid can be prepared by using known polymerization methods, such as open ring polymerization of lactide, dehydration condensation of lactic acid, a method of combining these and solid phase polymerization and the like, suitably using a catalyst such as a bivalent or tetravalent tin compound, metal tin, a zinc compound, and an aluminum compound or the like.

In general, homo-polylactic acid is inferior in rigidity as compared with stereocomplex-type polylactic acid, but according to the method of the present invention, surprisingly by containing the homo-polylactic acid, flexibility can be given to the obtained button, and due to a synergistic effect with stereocomplex-type polylactic acid, instead a strength of the button is improved, and such a button does not crack as a shell button and a polyester button do. Such homo-polylactic acid may be used in a ratio of 30% by weight or less, preferably 3 to 30% by weight based on the whole molding material, and in particular, by using the homo-polylactic acid in a ratio of 5 to 20% by weight based on the whole molding material, a button with a high hardness can be obtained. Since homo-polylactic acid is comparatively inexpensive, it also has a merit for contributing to cost reduction.

In addition, the method of the present invention can also be used in the case of producing members such as ornament products and packaging products, for example, buckles of a belt, a backpack etc., and clamps of a cell phone strap and accessories etc., from a molding material made of a biomass material, not limiting to molding of a button, and products having heat resistance and hardness and products having transparency to semi-transparency and /or glossiness can be obtained without accompanying a problem such as dissolution of the molding material in a metal mold.

In addition, the molding material may contain additives such as titanium oxide white, iron oxide red, iron oxide yellow, iron oxide brown, ultra marine blue, phthalocyanine blue, carbon black, tartrazing yellow, zinc oxide, disperse dye, mica, aluminum oxide, silica, glass, basic lead carbonate, pearl essence, bismuth oxychloride, bamboo powder and coconut powder. The mixture is molded, and whereby quality of color, a glossiness degree etc. of the obtained button can be adjusted. For example, mica can be used in a ratio of preferably 0.03 to 2% by weight, more preferably 0.05 to 1.5% by weight, and further more preferably 0.1 to 1.0% by weight based on the whole molding material, and titanium oxide can be used in a ratio of preferably 0.03 to 2.0% by weight, more preferably 0.05 to 1.5% by weight, and further more preferably 0.1 to 1.0% by weight based on the whole molding material. According to the method of the present invention, using such a small amount of mica and titanium oxide, for example, a pearl-like, ivory-like, silk-like, or shell-like button that is transparent or semi-transparent and/or glossy can be obtained. In particular, a disperse dye may be applied to a button after molding by coating, spraying, a post dyeing treatment or the like after molding the molding material.

### EFFECT OF THE INVENTION

The button of the present invention is made of a biomass material and does not give adverse effects on the environment, and as compared with a conventional button using a biodegradable resin, the button is excellent in heat resistance and is neither melted nor deformed under high temperature, and is suitable for a button for clothes, a button for bags such as a backpack etc., a button for a medical appliance such as a medical uniform, and for packaging and for electrical and mechanical devices. According to the method of the present invention, a button with high quality as follows can be obtained from a biomass material; which has excellent heat resistance and high strength, which can sufficiently withstand intensive impact, Which shows transparency to semi-transparency and/or glossiness, Which has rich dyeing properties, and Which can be dyed vividly or blurrily according to necessity. Further, it is possible to impart biodegradability according to necessity. According to the method of the present invention, also by using homo-polylactic acid in a part of the molding material, a button with high quality of transparency to semi-transparency and/or glossiness, which has heat resistance and high strength, can be produced.

### PRODUCTION EXAMPLES

Stereocomplex-type polylactic acid was produced as a molding material according to the following Production Examples 1 to 3.

### [Production Example 1]

### --Production of L-polylactic acid polymer--

To a polymerization container, 100 parts by weight of L-lactide having an optical purity of 99.5% was added, and after replacing the inside of the system with nitrogen, thereto were added 0.2 parts by weight of stearyl alcohol and 0.05 parts by weight of tin octylate as a catalyst and reacted at 190°C for 2 hours to obtain a polymer having a weight average molecular weight of 180,000. The excess lactide was removed from this polymer, and 0.055 parts by weight of ethyl diethyl phosphonoacetate was added thereto and mixed well. A weight average molecular weight of the obtained polymer was 165,000.

A same kind of polylactic acid polymer having a weight average molecular weight of 150,000 to 200,000 was obtained in the same method, changing incorporating amounts of tin octylate and stearyl alcohol.

### [Production Example 2]

### --Production of D-polylactic acid polymer--

To a polymerization container, 100 parts by weight of D-lactide having an optical purity of 99.2% was added, and after replacing the inside of the system with nitrogen, thereto were added 0.2 parts by weight of stearyl alcohol and 0.05 parts by weight of tin octylate as a catalyst and reacted at 190°C for 3 hours to obtain a polymer having a weight average molecular weight of 180,000. The excess lactide was removed from this polymer, and 0.055 parts by weight of ethyl diethyl phosphonoacetate was added thereto and mixed well. A weight average molecular weight of the obtained polymer was 165,000.

A same kind of polylactic acid polymer having a weight average molecular weight of 150,000 to 200,000 was obtained in the same method, changing incorporating amounts of tin octylate and stearyl alcohol.

### [Production Example 3]

### --Production of stereocomplex-type polylactic acid--

50 parts by weight of the L-lactic acid polymer obtained in Production Example 1 and 50 parts by weight of the D-lactic acid polymer obtained in Production Example 2 were mixed by a V type blender (V-100 type, manufactured by TOKUJU CORPORATION) at room temperature and at a rotational number of 25 rpm for 30 minutes, and then dried under reduced pressure at 110°C for 5 hours. 0.1 parts by weight of 2,2-methylenebis(4,6-di-tert-butylphenol) phosphate sodium salt was added per 100 parts by weight of this mixed polymer and mixed at 225°C, and then solidified by cooling to obtain a polymer. A weight average molecular weight of this polymer was 120,000.

A same kind of stereocomplex-type polylactic acid having a weight average molecular weight of 80,000 to 200,000 was obtained in the same method, changing a temperature condition at the time of mixing the mixed polymer to 225 to 265°C, and changing an incorporating amount of an additive, for example, 2,2-methylenebis(4,6-di-tert-butylphenol) phosphate sodium salt or the like.

In addition, a weight average molecular weight of the polymer was obtained from comparison with a polystyrene standard sample by GPC (column temperature of 40°C, chloroform).

### EXAMPLES

The button of the present invention was produced by the following Examples. Compositions of molding materials of respective Examples are shown in Table 1 described at the last of Examples.

### [Example 1]

The button of the present invention was produced by using a stereocomplex-type polylactic acid resin having a weight average molecular weight of 80,000 to 170,000 and a stereocomplex-type crystallinity degree of 90 to 100% among the stereocomplex-type polylactic acid resins obtained in Production Example 3. In addition, the crystallinity degree of stereocomplex-type polylactic acid was measured in the following method.

### (Measurement method of stereocomplex crystallinity degree)

Using a differential scanning calorimeter TA-2920 manufactured by TA Instruments Co., a temperature of 100 mg of a sample was increased to 260°C from room temperature at a temperature increasing rate of 10°C/minute under a nitrogen atmosphere. A crystal having a melting peak at around 160°C by the first scanning was defined as a homo crystal and a crystal having a melting peak at 190°C or more was defined as a stereo crystal, and a stereocomplex crystallinity degree S (%) was calculated by the following formula. S(%) = [(ΔHMs/ΔHms0)/(ΔHmh/ΔHmh0 + ΔHms/ΔHms0)] (provided that, ΔHms0 = 203.4 J/g, ΔHmh0 = 142 J/g, ΔHms; melting enthalpy of stereocomplex crystal, ΔHmh; melting enthalpy of homo crystal)

### (Production of button)

Stereocomplex-type polylactic acid (pellet form) and blended oil (Brian-M-51, manufactured by ARIS CHEMICAL INDUSTRIES LTD.; 0.1% by weight based on resin pellet weight) were charged into a tumbler and mixed for 10 to 15 minutes. The obtained mixed material was charged into a hopper of an injection molding machine (TS40P5ASE-EO457148, manufactured by NISSEI PLASTIC INDUSTRIAL CO., LTD.) and injection-molded under injection molding conditions of a hopper temperature at 205°C, a heater temperature at 220°C and a nozzle temperature at 220°C and under conditions of a metal mold temperature at 30 to 50°C for 20 to 50 seconds per one cycle to obtain a molded article. This molded article was subjected to a baking treatment at 100 to 110°C by a dryer (PO-120, manufactured by MATSUI MFG Co., Ltd) for 30 minutes to 1 hour to obtain a button of Example 1.

### [Example 2]

A button of Example 2 was produced in the same method as in Example 1 except for using the same stereocomplex-type polylactic acid resin used in Example 1 and mica (particle diameter; 1 to 60µm, Iriodin111, manufactured by Merck Ltd. Japan) and charging the mica with the stereocomplex-type polylactic acid and blended oil in a tumbler.

### [Example 3]

A button of Example 3 was produced in the same method as in Example 1 except for using the same stereocomplex-type polylactic acid used in Example 1, the same mica used in Example 2 and titanium oxide (BR-DAZ-07Z640, manufactured byDainichiseika Color & Chemicals Mfg. Co., Ltd.) and charging the mica and titanium oxide with the stereocomplex-type polylactic acid and blended oil in a tumbler.

### [Example 4]

A button of Example 4 was produced in the same method as in Example 1 except for using the same stereocomplex-type polylactic acid used in Example 1 and the same titanium oxide used in Example 3 and charging the titanium oxide with the stereocomplex-type polylactic acid and blended oil in a tumbler.

### [Example 5]

A button of Example 5 was produced in the same method as in Example 2 except that a baking treatment was not performed.

### [Example 6]

A button of Example 6 was produced in the same method as in Example 3 except that a baking treatment was not performed.

### [Examples 7 to 10]

Buttons of Examples 7 to 10 were produced in the same method as in Example 1 except for using the same stereocomplex-type polylactic acid resin used in Example 1 and a homo-polylactic acid resin (having a weight average molecular weight of 80,000 to 120,000 and a crystal melting point of 150 to 180°C) and charging the homo-polylactic acid resin with the stereocomplex-type polylactic acid and blended oil in a tumbler.

In addition, all of the buttons of Examples 1 to 10 were able to be taken out from a metal mold without difficulty and obtained as products with arranged shapes.

**[Table 1]**

| | Composition of molding material (%) | | | |
|---|---|---|---|---|
| | Stereocomplex-type polylactic acid | Polylactic acid | Mica | Titanium oxide |
| Example 1 | 100 | 0 | - | - |
| Example 2 | 99.9 | 0 | 0.1 | - |
| Example 3 | 99.3 | 0 | 0.1 | 0.6 |
| Example 4 | 99.7 | 0 | - | 0.3 |
| Example 5 | 99.9 | 0 | 0.1 | - |
| Example 6 | 99.3 | 0 | 0.1 | 0.6 |
| Example 7 | 90 | 10 | - | - |
| Example 8 | 80 | 20 | - | - |
| Example 9 | 70 | 30 | - | - |
| Example 10 | 60 | 40 | - | - |

### [Comparative Example]

Production of a button was tried by a conventional method, using 100% by weight of the same stereocomplex-type polylactic acid resin used in Example 1 based on the whole molding material.

Stereocomplex-type polylactic acid (pellet form) and blended oil (Brian-M-51, manufactured by ARIS CHEMICAL INDUSTRIES LTD.; 0.1% by weight based on resin pellet weight) were charged into a tumbler and mixed for 10 to 15 minutes, and then the obtained mixed material was charged into a hopper (215°C) of an injection molding machine (TS40P5ASE-EO457148, manufactured by NISSEI PLASTIC INDUSTRIAL CO., LTD.) and injection-molded under conditions of a heater temperature at 220°C, a nozzle temperature at 220°C, and a metal mold temperature at 160°C for 20 to 50 seconds per one cycle to try production of a button, but the stereocomplex-type polylactic acid resin was molten in a metal mold in a part, and thus was not able to be taken out from the metal mold as a product with an arranged shape.

### (Evaluation of external appearance)

The appearance of the buttons of Examples 1 to 5 and 7 to 9 were evaluated in terms of transparency and glossiness. Evaluation of a degree of transparency was followed by the following criteria.

### Results are shown in Table 2.

### (Evaluation criteria of degree of transparency)

A button was placed on paper provided with a colored pattern, and it was confirmed by visual observation whether the pattern would be transparently seen through the button or not.
1. The pattern is seen through and a button is transparent.
2. A color of the pattern can be confirmed, but there is turbidity and a button is semi-transparent.
3. Turbidity is intensive at such a level that a color is barely recognized, but there is transparency and a button is semi-transparent.
4. Even a color is not recognized, there is no transparency and a button is opaque.

**[Table 2]**

| | External appearance | |
|---|---|---|
| | Transparency | Glossiness |
| Example 1 | 1 | There are luster and shiny feeling. |
| Example 2 | 1-2 | There is pearl-like glossiness. |
| Example 3 | 1-2 | There is ivory-like glossiness. |
| Example 4 | 1-2 | There is shell-like glossiness. |
| Example 5 | 4 | There is dull glossiness, but appearance is somewhat somber. |
| Example 7 | 2-3 | There are luster and shiny feeling. |
| Example 8 | 2-3 | There are luster and shiny feeling. |
| Example 9 | 2-3 | There are luster and shiny feeling. |

### [Test Example]

### (Ironing test at 160°C for 30 seconds)

An iron (1400 g) at 160°C was put on the buttons of Examples 1 to 9 placed on a flat board and pressed for 30 seconds. The presence or absence of deformation and discoloration of the buttons was evaluated by visually observing state of the buttons. Results are shown in Table 3.

**[Table 3]**

| | Deformation | Discoloration |
|---|---|---|
| Example 1 | Absence | Absence |
| Example 2 | Absence | Absence |
| Example 3 | Absence | Absence |
| Example 4 | Absence | Absence |
| Example 5 | Absence | Absence |
| Example 6 | Absence | Absence |
| Example 7 | Absence | Absence |
| Example 8 | Absence | Absence |
| Example 9 | Absence | Absence |

### (Strength test)

Strength of portions between holes of the buttons of Examples 1 to 8 and a commercially available button made of a polyester resin (Conventional Example) was measured with a tensile speed of 1 cm/min. in accordance with JIS-S-4025. All buttons have a diameter of 10 mm and a thickness of 3 mm, and two holes on their center.

The buttons were pulled at 1 cm/min. in the direction of being away from a fixing device in a state that a wire was put through the holes of the buttons to hook and both ends of the wire were aligned to fix to the fixing device, and a pulling strength at the time when the button were broken was recorded. Results are shown in Table 4 in accordance with the following criteria.

### (Evaluation criteria of strength)

⊚: 300 N or more and 500 N or less
○: 150 N or more and less than 300 N
△: 100 N or more and less than 150 N
×: Less than 100 N

**[Table 4]**

| | Strength (N) |
|---|---|
| Example 1 | ⊚ |
| Example 2 | ○ |
| Example 3 | ○ |
| Example 4 | ○ |
| Example 5 | ○ |
| Example 6 | △ |
| Example 7 | ⊚ |
| Example 8 | ○ |
| Example 9 | ○ |
| Example 10 | △ |
| Conventional Example | × |

### (Dyeing test)

The buttons of Examples 1, 4, 5 and 7 to 9 were dyed using colorants (P-1 yellow, P-3 red, P-6 navy blue, and P-9 black, manufactured by Iris Co., Ltd.) at a ratio of 0.5 to 1% by weight for each button weight. All of the dyed buttons obtained excellent evaluations (evaluation value 5) by color fastness test (JIS-L-0860 and JIS-L-0861).

The color fastness test is carried out by the following method. The temperature of 100ml perchloroethylene in a test bottle is adjusted to 30 ± 2 °C, then a sample is added into the test bottle, the test bottle is sealed and attached to a washing test machine, and the test machine is operated at 30± 2 °C for 30 minutes. The sample removed from the test bottle is rinsed with perchloroethylene and dried. The degree of discoloration of the sample is evaluated by naked eye. Further it is evaluated by another test which is substantially identical to the above method except for using industrial gasoline No.5 instead of perchloroethylene.

## Claims

1. A button made of a biomass material, which has a heat deformation temperature of 160°C or more.

2. The button made of a biomass material according to claim 1, which is obtained by molding a molding material containing a resin comprising polylactic acid, and has a strength of 230 N or more in accordance with JIS-S-4025.

3. The button made of a biomass material according to claim 2, wherein said molding material contains 70 to 100% by weight of a resin comprising stereocomplex-type polylactic acid and 0 to 30% by weight of a resin comprising polylactic acid with a content of L-lactic acid or D-lactic acid of 90% or more, based on the molding material.

4. The button made of a biomass material according to any one of claims 1 to 3, wherein said molding material contains an additive selected from the group consisting of titanium oxide white, iron oxide red, iron oxide yellow, iron oxide brown, ultra marine blue, phthalocyanine blue, carbon black, tartrazine yellow, zinc oxide, disperse dye, mica, aluminum oxide, silica, glass, basic lead carbonate, pearl essence, bismuth oxychloride, bamboo powder and coconut powder.

5. The button made of a biomass material according to any one of claims 1 to 4, which is transparent or semi-transparent, and/or has glossiness.

6. A method for producing a button having a heat deformation temperature of 160°C or more, which comprises molding a molding material containing a biomass material at a metal mold temperature of 10 to 150°C by a molding process selected from the group consisting of injection molding, extrusion molding and compression molding.

7. The method for producing a button according to claim 6, which comprises a baking treatment at 80 to 130°C for 15 minutes to 8 hours after molding said molding material by said molding process.

8. The method for producing a button according to claim 6 or 7, wherein said molding material contains a resin comprising polylactic acid.

9. The method for producing a button according to any one of claims 6 to 8, wherein said molding material contains 70 to 100% by weight of a resin comprising stereocomplex-type polylactic acid and 0 to 30% by weight of a resin comprising polylactic acid with a content of L-lactic acid or D-lactic acid of 90% or more, based on the molding material.
